# EUROPÄISCHE PATENTSCHRIFT

(11) **EP 2 229 078 B1**
(45) Veröffentlichungstag und Bekanntmachung des Hinweises auf die Patenterteilung: **28.12.2011**
(21) Anmeldenummer: 09700323.0
(22) Anmeldetag: 08.01.2009
(51) Int. Cl.: A47C 23/00, F16F 13/08, F16F 1/34, F16F 3/10, F16F 9/30, F16F 13/04

(54) **AUFLAGEKONSTRUKTION FÜR EINE MATRATZE**
SUPPORT CONSTRUCTION FOR A MATTRESS
STRUCTURE SUPPORT POUR MATELAS

(30) Priorität: 11.01.2008 DE 202008000524 U; 14.02.2008 DE 202008002110 U
(43) Veröffentlichungstag der Anmeldung: 22.09.2010
(73) Patentinhaber: Recticel Schlafkomfort GmbH, 44867 Bochum (DE)
(72) Erfinder: LANZA, Giacomo, 59349 Holzwickede (DE)
(74) Vertreter: Kluin, Jörg-Eden
(86) Internationale Anmeldenummer: PCT/EP2009/050176
(87) Internationale Veröffentlichungsnummer: WO 2009/087195

(56) Entgegenhaltungen:
- EP-A- 0 624 332
- EP-A- 0 631 066
- WO-A-2008/015247
- DE-A1- 3 000 511
- DE-U1- 20 003 576
- DE-U1-202004 014 134
- DE-U1-202005 008 533
- DE-U1-202007 000 015
- FR-A- 2 660 382
- FR-A- 2 793 125
- US-A- 4 738 436

## Beschreibung

Die Erfindung betrifft ein Auflageelement, das von einer Auflagekonstruktion für eine Matratze umfasst ist.

Matratzen sind Polster, die man auf eine Untermatratze legt, die häufig eine Lattenkonstruktion umfasst, auch um einer Person ein komfortables Liegen und Schlafen zu ermöglichen. Es gibt viele Ansätze das Liegeempfinden bei einer Matratze zu verbessern. Die vorliegende Erfindung betrifft die Unterlage der Matratze. Es hat viele Ansätze gegeben, den Liegekomfort dadurch zu verbessern, dass der Körper einer liegenden Person mit der größtmöglichen Fläche auf der Matratze aufliegt, was Druckpunkte im Schulter- und Beckenbereich verhindert, wie dies beim Wasserbett der Fall ist. Da jedoch das Wasserbett einige systemimmanente Nachteile aufweist, hat es in der Vergangenheit einige Bestrebungen und konstruktive Ansätze gegebenen, den Liegekomfort eines Wasserbettes auf anderem Wege unter Vermeidung dieser Nachteile zu imitieren.

Beispielsweise ist aus der DE 199 38 609 A1 ein Kugelgel aufweisendes und damit anpassungsfähiges Flächenlager als Matratze bekannt.

Aus der DE 1 260 092 ist eine auf mehreren Stützelementen gelagerte Liegefläche bekannt, wobei jedes Stützelement einen Kolben aufweist, der auf ein allen Stützelementen gemeinsames, druckaufnehmendes und -übertragendes Medium wirkt.

Aus der EP 0 038 155 B1 ist ein Lattenrost bekannt, bei dem dessen Latten an ihren äußeren Enden auf einem gemeinsamen unter Druck stehenden, flexiblen Schlauch aufliegen, der in einer Wanne des Lattenrostrahmens angeordnet ist.

Aus der EP 0 721 308 B1 ist ein pneumatisches, federndes Flächenlager bekannt, das insbesondere in die Seitenholme eines Unterrahmens integriert ist und ferner ein mit einem nicht-kompressiblen Medium gefülltes, deformierbares Behältnis aufweist, auf dem kleinflächige Auflageelemente aufliegen. Die Deformation des Behältnisses wird durch mehrere Seitenwände gezielt in einer Richtung zur Hubbewegung der Auflageelemente zugelassen, in den anderen Richtungen durch die Seitenwände behindert, um damit eine erhebliche nach oben gerichtete Hubbewegung der anderen, d.h. weniger bis gar nicht belasteten Auflageelemente zu bewirken. Die Auflageelemente bewirken aufgrund ihrer Ausgestaltung eine starke Formänderung des Behältnisses. Die Konstruktion ist aufgrund der mehreren Seitenwände sehr voluminös und lässt sich so lediglich seitlich an einem Rahmen anbringen. Zudem ist diese Vorrichtung teuer und aufwendig in der Herstellung und lässt sich nachträglich kaum anpassen, um beispielsweise gezielt ein gewünschtes Liegeempfinden einzustellen. Eine Anbringung in Querrichtung zur Liegerichtung ist praktisch nicht realisierbar.

Vor dem Hintergrund der zuvor angegebenen Nachteile des Standes der Technik liegt der Erfindung die Aufgabe zugrunde, ein Auflageelement für eine Matratze beziehungsweise eine Untermatratze mit verbessertem Liegekomfort bereitzustellen. Diese Aufgabe wird durch das in Anspruch 1 wiedergegebene Auflageelement gelöst.

Erfindungsgemäß ist das Auflageelement für eine Matratze bestimmt. Wie eingangs beschrieben, sind Matratzen im Allgemeinen Polster, die man auf die erfindungsgemäße Unterlage legt, um einer Person ein komfortables Liegen und Schlafen zu ermöglichen. Die Erfindung ist hinsichtlich der Matratze nicht eingeschränkt. Folglich kann es sich beispielsweise um eine Schaumstoffkem-, Federkern-, Latexkern-, um eine mit Naturfasern gefüllte, eine mit viskoelastischen Einlagen versehene Matratze oder gar eine Gelmatratze handeln.

Das erfindungsgemäße Auflageelement ist derart gestaltet, dass dessen Oberseite bei bestimmungsgemäßer Anordnung des Auflageelements an der Unterseite der Matratze anliegt.

Das erfindungsgemäße Auflageelement zeichnet sich dadurch aus, dass es mittels eines mit einem Dämpfungselement wirkverbundenen Federlements an dem tragenden Grundelement befestigt ist. Das Dämpfungselement bewirkt, dass das Auflageelement bei einer Belastung nicht rein federnd nachgibt und bei einer Entlastung nicht zurückschnellt, sondern die bei Be- oder Entlastung aufgrund der federnden Abstützung vollzogenen Bewegungen mit gewisser zeitlicher Verzögerung, das heißt gedämpft erfolgen. Es hat sich gezeigt, dass aufgrund dieser Maßnahme der Liegekomfort, die eine Matratze nach dem Stand der Technik dem Benutzer bietet, erhöht werden kann. Insbesondere wird durch die gedämpfte Anordnung vermieden, dass bei einer plötzlichen Belastung des Auflageelements der Untermatratze, wie dies beispielsweise beim plötzlichen Wenden einer schlafenden Person der Fall sein kann, das Federelement durchschlägt, was insbesondere bei weichen und/oder dünnen Matratzen von der Person als hartes Auftreffen auf eine Unterlage empfunden wird.

Das Federelement kann grundsätzlich aus jedem federelastischen Material ausgebildet sein. Besonders preisgünstig herstellbar ist es jedoch dann, wenn es aus Kunststoff besteht.

Das erfindungsgemäß vorgesehene Dämpfungselement kann in einer besonders bevorzugten Ausführungsform einen das Federelement zumindest teilweise einhüllenden Überzug umfassen. Aufgrund dieser Maßnahme sind Ankopplungsmittel wie Gelenke oder separate Kupplungsmittel, wie sie beispielsweise im Falle von Kolben/Zylindereinheiten aufweisenden Dämpfungselementen notwendig wären, nicht nötig.

Der Überzug kann aus jedem, die Bewegung des Federelements dämpfenden Material hergestellt sein. Versuche haben gezeigt, das ein Überzug für die bestimmungsgemäße Anwendung besonders gute Dämpfungseigenschaften zeigt, wenn er eine Hülle mit einem von dieser umschlossenen fluiden Medium umfasst.

Ganz besonders gut geeignet ist ein Überzug, der eine Gelschicht aufweist.

Die Dämpfung kann weiter verbessert werden, wenn - wie bevorzugt - innerhalb eines von dem Federelement gebildeten Ringes mindestens eine flexible Brücke, die vorzugsweise ebenfalls aus Gel besteht, vorgesehen ist. Im Gegensatz zu dem unmittelbar an der Feder anliegenden Hüllenmaterial bewirken bereits geringe Auslenkungen der Feder eine relativ große Längenänderung der Brücke, was zur Erhöhung der Dämpfungswirkung beiträgt.

Die gewünschte Nachgiebigkeit und deren Eigenschaften, wie Elastizität und Dämpfung usw., ergeben sich in Kombination und Zusammenwirkung aus den Eigenschaften des Federelements und des Dämpfungselements. Daher lassen sich die Liegeeigenschaften, d.h. die Bedingungen zur Erreichung eines gewünschten Liegeempfindens, leicht beispielsweise durch Auswahl und Austausch der Form und des verwendeten Materials der zuvor genannten Elemente so beeinflussen, dass sich das gewünschte Liegeempfinden einstellt. Beispielsweise kann die Dämpfung durch Ändern des Gelmaterials und/oder der Schichtdicke und/oder der Brückenanordnung, leicht beeinflusst werden, ohne dass eine aufwendige Umkonstruktion erfolgen muss.

Bei dem Gel handelt es sich allgemein um ein leicht deformierbares, an Gasen bevorzugt Flüssigkeiten reiches, disperses System aus mindestens zwei Komponenten, die zumeist aus einem festen, kolloid zerteilten Stoff mit langen oder stark verzweigten Teilchen und einer Flüssigkeit (meist Wasser) als Dispersionsmittel bestehen. Dabei ist die feste Substanz kohärent, d.h. sie bildet im Dispersionsmittel ein räumliches Netzwerk, wobei die Teilchen durch Neben- oder Hauptvalenzen an verschiedenen Punkten aneinanderhaften. Gelmassen für die Verwendung in druckverteilenden Elementen sind bekannt und vor allem beschrieben auf der Basis von Polyvinylchlorid, von Polyorganosiloxanen und von Polyurethanen, d.h. Umsetzungsprodukten aus Polyolen und Polyisocyanaten. Besonders vorteilhaft für die gezielte Anpassung der Eigenschaften an den jeweiligen Belastungsgrad haben sich hierbei Gelmassen auf Basis von Polyurethanen erwiesen. Die Hülle kann durch eine oberflächennahe Schichtverhärtung des Gels ausgebildet sein. Das Gel kann im Allgemeinen ein Fluid, beispielsweise Wasser, Gas mit festen, weichen Kleinsteilen beispielsweise aus Schaumstoff sein.

Das Federelement des Auflageelements weist die Form eines Faltenbalges auf.

Dieser umfasst dann - besonders bevorzugt - bezogen auf seine Durchmesserveränderung in Längsrichtung zwei Perioden, derart, dass die Enden des Faltenbalgs minimalen Durchmesser aufweisen.

Das eine Ende des Faltenbalgs ist vorzugsweise mit einem eine Auflagefläche für die Matratze bildenden Deckel, das andere Ende mit einem eine Montageseite zur Befestigung auf dem Grundelement bildenden Boden verschlossen.

Um die Formstabilität des Auflageelements zu erhöhen, kann in dem Bereich minimalen Durchmessers zwischen den Enden des Faltenbalges ein Zwischenboden vorgesehen sein. Diese verhindert, dass sich der Faltenbalg etwa in der Mitte seiner Längserstreckung bei Belastung nach außen wölbt.

Das Dämpfungselement kann beidseitig des Zwischenbodens vorgesehen sein. Das Dämpfungselement kann dann einenends an dem Deckel, anderenends an dem Boden anliegen.

Um jedoch ein besonders sensibles Ansprechverhalten bereits bei geringen Belastungen des Auflageelements zu bewirken ist bei einer besonders bevorzugten Weiterbildung zwischen dem Dämpfungselement und dem Deckel und/oder zwischen dem Dämpfungselement und dem Boden ein Abstand vorgesehen. Die Verformung aus der Ruhelage des Auflageelements erfolgt bei nur geringen Auslenkungen im Wesentlichen federelastisch, bis eine weitere Auslenkung zur Aktivierung des Dämpfungselements führt.

Die Nachgiebigkeitscharakteristik des Auflageelements kann auch dadurch beeinflusst und an die durch den jeweiligen Einsatzzweck vorgegebenen Anforderungen angepasst werden, dass das Dämpfungselement auf beiden Seiten des Zwischenbodens unterschiedliche Dämpfungseigenschaften aufweist.

Bei einer weiteren, ein faltenbalgförmiges Federelement aufweisenden Ausführungsform umfasst das Dämpfungselement eine innen auf das Federelement aufgebrachte Dämpfungsschicht. Diese kann zur Stabilisierung des Federelements mit sich durch das Innenvolumen des Faltenbalgs erstreckenden Brücken verbunden sein.

Die Brücken können zur noch weitergehenden Stabilisierung derart ausgebildet sein, dass sie zwischen sich oder mit der Dämpfungsschicht Hohlkammern ausbilden.

Die Brücken sind - besonders bevorzugt - stoffschlüssig, besonders bevorzugt einstückig mit der Dämpfungsschicht verbunden, da durch diese Maßnahme eine dauerhafte Verbindung auch bei häufiger dynamischer Belastung der Auflagekonstruktion hergestellt werden kann.

Die Erfindung soll nun anhand der in der Zeichnung dargestellten Ausführungsbeispiele einer Untermatratze und erfindungsgemäßer Auflagekonstruktion näher erläutert werden. Es zeigen:
- Fig. 1: - schematisch - eine Aufsicht des Ausführungsbeispiels der Unter matratze;
- Fig. 2: - ausschnittsweise und schematisch - eine in Längsrichtung dargestellte Schnittdarstellung der in Figur 1 gezeigten Ausführungsform;
- Fig. 3: - schematisch - eine Ausführungsform eines erfindungsgemäßen Auflageelements in einem vertikalen Schnitt (Schnitt VI-VI in Fig. 7);
- Fig. 4: die Ausführungsform gemäß Fig. 3 im Vertikalschnitt (Schnitt VII-VII in Fig. 3);

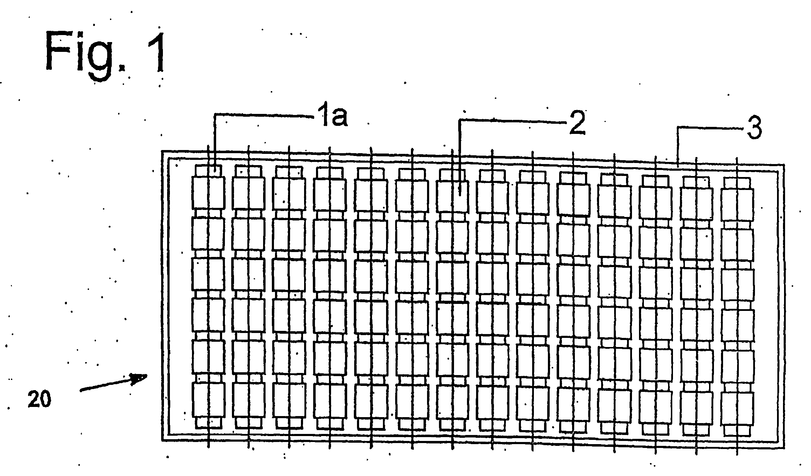

Figur 1 zeigt in Aufsicht eine erfindungsgemäße Untermatratze 20, d.h. es wird die Seite dargestellt, auf der eine nicht dargestellte Matratze zur Auflage kommen würde. Auf quer zur Liegerichtung einer bestimmungsgemäß darauf liegenden Person (quer zur Richtung der langen Seite der dargestellten Ausführungsform) und parallel angeordneten Latten 1a, die Teil eines Grundelements 5 sind, sind eine Mehrzahl von Auflagekonstruktionen 10 angebracht. Jede Auflagekonstruktion umfasst ein flächiges Auflageelement 2. Jedes Auflageelemente 2 ist über ein in dieser Darstellung verdecktes Federelement 4 an der jeweiligen Latte 1 a befestigt. Die Latten 1a sind ihrerseits in einem die Untermatratze 20 seitlich begrenzenden Rahmen 3 angeordnet.

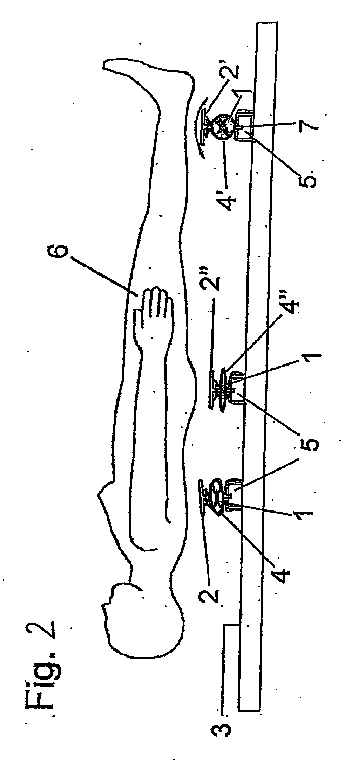

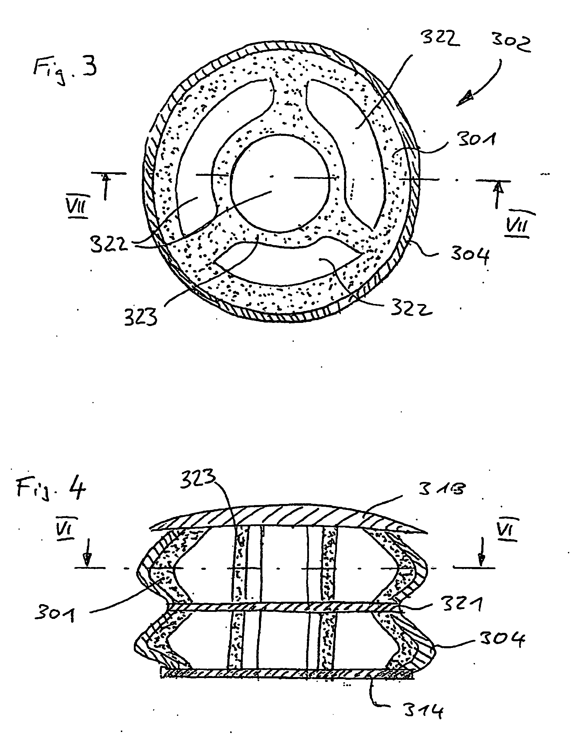

Wie aus Figur 2 ersichtlich ist, die eine Seitenansicht einer Auflagekonstruktion 10 zeigt, wird deutlich, dass die Federelemente 4 mit Hilfe einer Klippbefestigung 7 an der Latte 1a gehaltert sind. Aufgrund ihrer federnden Eigenschaften gestatten sie ein belastungsabhängiges Absinken der Auflageelemente 2, wobei verschiedene Belastungszustände 2, 2', 2" in Figur 3 dargestellt sind. Bei den unterschiedlichen Belastungen federt das Federelement 4, 4', 4" unter Absinken des Auflageelements 2, 2', 2" unterschiedlich stark ein.

Das in den Fig. 3 und 4 dargestellte Ausführungsbeispiel des erfindungsgemäßen Auflageelements 302 weist ein faltenbalgartig gestaltetes Federelement 304 auf. An dessen Oberseite ist ein Deckel 313 angeordnet, an dessen Unterseite eine Befestigungsplatte 314. Der Faltenbalg weist eine Länge über zwei Perioden auf, derart, dass die beiden Enden etwa einen minimalen Durchmesser aufweisen. In dem Bereich minimalen Durchmessers zwischen dem Deckel 313 und der Platte 314 ist ein Zwischenboden 321 vorgesehen, die ein Ausbeulen des Federelements 304 in diesem Bereich verhindert und es somit stabilisiert.

Das Dämpfungselement 301 ist von einer Beschichtung des Federelements mit einem Material aus Gelwerkstoff sowie Hohlräume 322 begrenzender Brücken 323 gebildet.

## Patentansprüche

1. Auflageelement einer Auflagekonstruktion mit einem tragenden Grundelement (5), an welchem das Auflageelement anbringbar ist, für eine Matratze, wobei das Auflageelement (2;302) mindestens ein mit einem Dämpfungselement (1) wirkverbundenes Federelement (304) umfasst, welches die Form eines Faltenbalges aufweist und das Dämpfungselement eine innen auf das Federelement (304) aufgebrachte Dämpfungsschicht umfasst,
**dadurch gekennzeichnet,**
**dass** die Dämpfungsschicht (301) mit sich durch das Innenvolumen des Faltenbalges erstreckenden Brücken (323) verbunden ist.

2. Auflageelement nach Anspruch 1, **dadurch gekennzeichnet, dass** das eine Ende des Faltenbalges mit einem eine Auflagefläche für die Matratze bildenden Deckel (313), das andere Ende mit einem eine Montageseite zur Befestigung auf dem Grundelement (5) bildenden Boden (314) verschlossen ist.

3. Auflageelement nach Anspruch 1 oder 2, **dadurch gekennzeichnet, dass** der Faltenbalg zwei Perioden umfasst, derart, dass dessen Enden minimalen Durchmesser aufweisen.

4. Auflageelement nach Anspruch 3, **dadurch gekennzeichnet, dass** in dem Bereich minimalen Durchmessers zwischen den Enden des Faltenbalges ein Zwischenboden (321) vorgesehen ist.

5. Auflageelement nach Anspruch 4, **dadurch gekennzeichnet, dass** das Dämpfungselement (301) beidseitig des Zwischenbodens (321) vorgesehen ist.

6. Auflageelement nach Anspruch 5, **dadurch gekennzeichnet, dass** das Dämpfungselement (301) einenends an dem Deckel (313), anderenends an dem Boden (314) anliegt.

7. Auflageelement nach Anspruch 6, **dadurch gekennzeichnet, dass** zwischen dem Dämpfungselement (301) und dem Deckel (313) und/oder zwischen dem Dämpfungselement (301) und dem Boden (314) ein Abstand vorgesehen ist.

8. Auflageelement nach einem der Ansprüche 5 bis 7, **dadurch gekennzeichnet, dass** das Dämpfungselement (301) auf beiden Seiten des Zwischenbodens unterschiedliche Dämpfungseigenschaften aufweist.

9. Auflageelement nach einem der Ansprüche 1 bis 8, **dadurch gekennzeichnet, dass** die Brücken (323) zwischen sich oder mit der Dämpfungsschicht Hohlkammern (322) bilden.

10. Auflageelement nach einem der Ansprüche 1 bis 9, **dadurch gekennzeichnet, dass** die Brücken (323) stoffschlüssig mit der Dämpfungsschicht verbunden sind.

## Claims

1. Bearing element of a bearing structure, having a load-bearing base element (5) on which the bearing element can be fitted, for a mattress, wherein the bearing element (2; 302) comprises at least one spring element (304), which is operatively connected to a damping element (1) and is in the form of a bellows, and the damping element comprises a damping layer applied to the inside of the spring element (304),
**characterized**
**in that** the damping layer (301) is connected to bridges (323) which extend through the inner volume of the bellows.

2. Bearing element according to Claim 1, **characterized in that** the one end of the bellows is closed by a top (313), which forms a bearing surface for the mattress, and the other end is closed by a bottom (314), which forms a mounting site for fastening on the base element (5).

3. Bearing element according to Claim 1 or 2, **characterized in that** the bellows comprises two periods, such that the ends thereof have a minimal diameter.

4. Bearing element according to Claim 3, **characterized in that** an intermediate bottom (321) is provided in the minimal-diameter region between the ends of the bellows.

5. Bearing element according to Claim 4, **characterized in that** the damping element (301) is provided on either side of the intermediate bottom (321).

6. Bearing element according to Claim 5, **characterized in that** the damping element (301) butts at one end against the top (313) and, at the other end against the bottom (314).

7. Bearing element according to Claim 6, **characterized in that** there is a spacing between the damping element (301) and the top (313) and/or between the damping element (301) and the bottom (314).

8. Bearing element according to one of Claims 5 to 7, **characterized in that** the damping element (301) has different damping properties on either side of the intermediate bottom.

9. Bearing element according to one of Claims 1 to 8, **characterized in that** the bridges (323) form hollow chambers (322) between themselves or with the damping layer.

10. Bearing element according to one of Claims 1 to 9, **characterized in that** the bridges (323) are connected to the damping layer with material bonding.

## Revendications

1. Élément de support d'une structure de support, avec un élément de base (5) porteur contre lequel l'élément de support peut être amené, pour un matelas, l'élément de support (2 ; 302) comprenant au moins un élément de ressort (304) activement relié à un élément d'amortissement (1) prenant la forme d'un soufflet et l'élément d'amortissement comprenant une couche amortissante appliquée à l'intérieur sur l'élément de ressort (304), **caractérisé en ce que** la couche amortissante (301) est reliée aux ponts (323) s'étendant à travers le volume intérieur du soufflet.

2. Élément de support selon la revendication 1, **caractérisé en ce qu'**une extrémité du soufflet est fermée par un cache (313) formant une surface portante pour le matelas et que l'autre extrémité est fermée par un fond (314) formant un côté de montage prévu pour la fixation sur l'élément de base (5).

3. Élément de support selon la revendication 1 ou 2, **caractérisé en ce que** le soufflet comprend deux temps, de telle sorte que ses extrémités présentent un diamètre minimal.

4. Élément de support selon la revendication 3, **caractérisé en ce qu'**un plancher intermédiaire (321) est prévu dans la zone de diamètre minimal, entre les extrémités du soufflet.

5. Élément de support selon la revendication 4, **caractérisé en ce que** l'élément d'amortissement (301) est prévu des deux côtés du plancher intermédiaire (321).

6. Élément de support selon la revendication 5, **caractérisé en ce que** l'élément d'amortissement (301) repose à une extrémité contre le cache (313), à l'autre extrémité contre le fond (314).

7. Élément de support selon la revendication 6, **caractérisé en ce qu'**une certaine distance est prévue entre l'élément d'amortissement (301) et le cache (313) et/ou entre l'élément d'amortissement (301) et le fond (314).

8. Élément de support selon l'une quelconque des revendications 5 à 7, **caractérisé en ce que** l'élément d'amortissement (301) présente des propriétés d'amortissement différentes des deux côtés du plancher intermédiaire.

9. Élément de support selon l'une quelconque des revendications 1 à 8, **caractérisé en ce que** les ponts (323) forment des chambres creuses (322) entre eux ou avec la couche amortissante.

10. Élément de support selon l'une quelconque des revendications 1 à 9, **caractérisé en ce que** les ponts (323) sont reliés à la couche amortissante par complémentarité de matières.
